# EUROPEAN PATENT SPECIFICATION

(11) **EP 3 831 541 B1**
(45) Date of publication and mention of the grant of the patent: **15.06.2022**
(21) Application number: 20165492.8
(22) Date of filing: 25.03.2020
(51) Int. Cl.: B25J 9/00

(54) **EXOSKELETON SYSTEM, CONTROL DEVICE AND CONTROL METHOD**
EXOSKELETTSYSTEM, STEUERUNGSVORRICHTUNG UND STEUERUNGSVERFAHREN
SYSTÈME D'EXOSQUELETTE, DISPOSITIF DE COMMANDE ET PROCÉDÉ DE COMMANDE

(30) Priority: 06.12.2019 TW 108144735
(43) Date of publication of application: 09.06.2021
(73) Proprietor: Wistron Corporation, Hsichih, 22181 New Taipei City (TW)
(72) Inventor: Chen, Hong-Siou, New Taipei City 22181 (TW); Chang, Yao-Tsung, New Taipei City 22181 (TW); Kao, Chuan-Yen, New Taipei City 22181 (TW); Tsou, Tsung-Yin, New Taipei City 22181 (TW)
(74) Representative: Straus, Alexander

(56) References cited:
- JP-A- 2002 144 278
- US-A1- 2010 114 329
- US-A1- 2011 066 088

## Description

### Field of the Invention

The present invention relates to an exoskeleton system, a control device and a control method, and more particularly, to an exoskeleton system, a control device and a control method capable of self-adjusting according to the frontal terrain.

### Background of the Invention

Exoskeleton robots assist people having mobility problems or enhance users' mobility, such as walking, stair climbing, slope climbing, and other applications. US 2011/0066088 A1 (D1) discloses a control device applied to an exoskeleton system, and JP 2002144278 A (D2) discloses a control device for a humanoid robot. Both devices comprise a sensing unit configured to measure topographic data and a processing unit coupled to the sensing unit configured to determine a frontal terrain of the exoskeleton system, respectively the humanoid robot, in a moving direction according to a measurement of the sensing unit.

Generally speaking, a conventional control method of an exoskeleton robot is to input control commands (such as walking or going up and down along a slope or ramp) by the user with buttons or panels; however, the exoskeleton robot must be programmed in advance for its step distance, slope, and stair height in this method. Hence, the conventional exoskeleton robots are often obstructed due to the variance of the slope and stair height, which makes the user kick the uphill terrain and ascending stair, or makes the user lose balance because of the variance of the angel and stair height for the downhill terrain and descending stair. Under such circumstances, the conventional exoskeleton robots are inconvenient to operate, and may cause discomfort to the user due to improper movements, or even cause safety problems.

Therefore, it is necessary to improve the prior art.

### Summary of the Invention

It is therefore a primary objective of the present invention to provide an exoskeleton system, a control device and a control method, to improve over disadvantages of the prior art.

This is achieved by a control device, applied to an exoskeleton system, according to the independent claims 1, 8 and 15 here below. The dependent claims pertain to corresponding further developments and improvements.

As will be seen more clearly from the detailed description following below, a control device, applied to an exoskeleton system, comprises a sensing unit, configured to measure topographic data; and a processing unit, coupled to the sensing unit, configured to determine a frontal terrain of the exoskeleton system in a moving direction according to a measurement of the sensing unit to adjust an operation of a driving device of the exoskeleton system; wherein the sensing unit is configured to measure a distance and a direction of at least one measuring point corresponding to the sensing unit to measure the topographic data, wherein the at least one measuring point is located in front of the exoskeleton system in the moving direction.

In another aspect, an exoskeleton system comprises at least one branch; a driving device, connected to the at least one branch, configured to drive the at least one branch according to a control signal; and a control device, comprising: a sensing unit, configured to measure a topographic data; and a processing unit, coupled to the sensing unit and the driving device, configured to determine a frontal terrain of the exoskeleton system in a moving direction according to a measurement of the sensing unit, to generate the control signal and to adjust an operation of a driving device; wherein the sensing unit is configured to measure a distance and a direction of at least one measuring point corresponding to the sensing unit to measure the topographic data, wherein the at least one measuring point is located in front of the exoskeleton system in the moving direction.

In another aspect, a control method, applied to an exoskeleton system, comprises measuring a topographic data; and determining a frontal terrain of the exoskeleton system in a moving direction according to the topographic data, to adjust an operation of a driving device of the exoskeleton system; wherein the step for measuring the topographic data comprises a distance and a direction of at least one measuring point corresponding to the exoskeleton system, wherein the at least one measuring point is located in front of the exoskeleton system in the moving direction.

### Brief Description of the Drawings

FIG. 1A is a schematic diagram of an exoskeleton system according to an embodiment of the present invention.
FIG. 1B is a functional block diagram of the exoskeleton system according to an embodiment of the present invention.
FIG. 2 is a schematic diagram of measuring a distance and a direction of a target point by a three-axis measuring method according to an embodiment of the present invention.
FIG. 3 is a schematic diagram of calculating a distance and a direction of a target point according to an embodiment of the present invention.
FIG. 4A to 4E are schematic diagrams of determining the frontal terrain in the moving direction according to an embodiment of the present invention.
FIG. 5 is a schematic diagram of measuring a distance and a direction of a target point according to an embodiment of the present invention.
FIG. 6 is a schematic diagram of measuring a distance and a direction of a target point according to an embodiment of the present invention.
FIG. 7 is a schematic diagram of a control process according to an embodiment of the present invention.

### Detailed Description

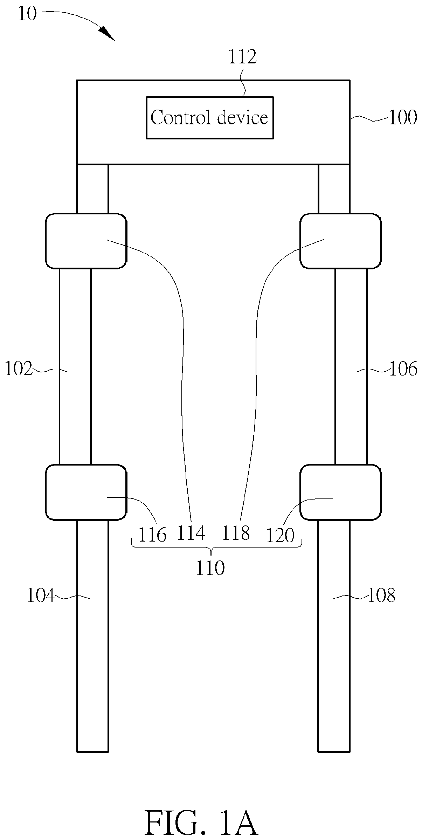

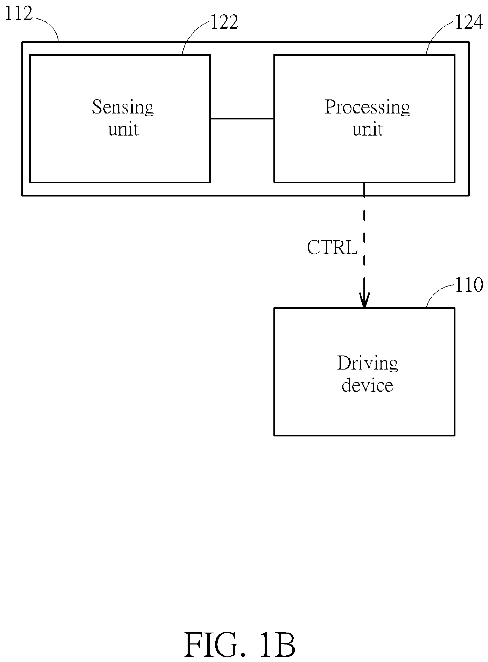

FIG. 1A, 1B are respectively a schematic diagram and a functional block diagram of an exoskeleton system 10 according to an embodiment of the present invention. The exoskeleton system 10, used to assist human moving, comprises a trunk 100, branches 102, 104, 106, 108, a driving device 110, and a control device 112. The branches 102, 104, 106 and 108 connected to the trunk 100, and may be fixed to or worn on legs of a user; for example, the branch 102 corresponds to the left upper leg, the branch 104 corresponds to the left lower leg, the branch 106 corresponds to the right upper leg, and the branch 108 corresponds to the right lower leg. The driving device 110 comprises motors 114, 116, 118 and 120, which are respectively connected to the branches 102, 104, 106 and 108, and the driving device 110 drives operations of the branches 102, 104, 106 and 108 to assist the user to walk or run according to a control signal CTRL generated by the control device 112. The control device 112 comprises a sensing unit 122 and a processing unit 124. The sensing unit 122 measures frontal topographic data of the exoskeleton system 10 in a moving direction thereof, and the processing unit 124 determines the frontal terrain, such as uphill, downhill, obstacles, etc. according to the measurement result of the sensing unit 122, to generate a control signal CTRL to drive driving device 110, for making exoskeleton system 10 to adjust the auxiliary force corresponding to the frontal terrain.

In brief, the control device 112 may measure the frontal topographic data or status in the moving direction of the exoskeleton system 10 worn by the user, and accordingly adjust the operation of the driving device 110. Therefore, if there are obstacles, uphill, downhill, stairs and other terrain changes in the moving direction of the user, the embodiment of the present invention automatically adjusts the operation of the driving device 110 without control commands manually inputted by the user, such that the relative movements among the branches 102, 104, 106 and 108 fit the follow-up terrain changes, so as to assist the user more efficiently and enhance convenience.

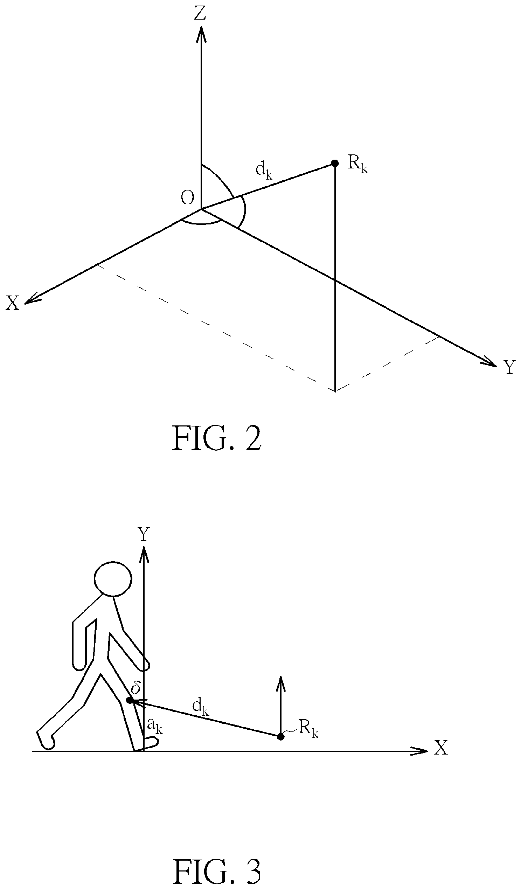

Notably, FIG. 1A and FIG. 1B illustrate an embodiment of the present invention, and those skilled in the art may make modifications and alterations accordingly, and not limited herein. For example, the sensing unit 122 may measure the frontal terrain data in various ways. In an embodiment, the sensing unit 122 may measure a distance and direction of at least one target point corresponding to the sensing unit 122, and the processing unit 124 may execute geometric operations to determine contour coordinates of terrain changes and accordingly determine the corresponding frontal terrain. For example, please refer to FIG. 2, which is a schematic diagram of measuring a distance and a direction of a target point Rₖ by a three-axis measurement method according to an embodiment of the present invention. As shown in FIG. 2, in a measurement, the sensing unit 122 measures a distance dₖ between the target point Rₖ and the sensing unit 122, and the relationship between the target point Rₖ and the sensing unit 122 may be mapped to a three-axis coordinate system, wherein the origin O is the sensing unit 122, and X-axis, Y-axis, and Z-axis represent the roll, pitch, and yaw respectively.

In addition, the sensing unit 122 may be fixed on any position of the exoskeleton system 10 as long as the topographic data is correctly measured. The sensing unit 122 may comprise a plurality of sensing subunits; for example, one of the sensing subunits is located on the branch of the left lower leg, and another sensing subunit is located on the branch of the right lower leg. As the configuration or disposition of the sensing unit 122 changes, calculation of the distance and direction between the target point and the sensing unit 122 needs to be adjusted. For example, please refer to FIG. 3, which is a schematic diagram of the sensing unit 122 calculating a distance and a direction of a target point according to an embodiment of the present invention. In the embodiment, the sensing unit 122 comprises two sensing subunits, one of the sensing subunits is disposed on the branch 104, and the other one is disposed on the branch 108. When the user walks naturally, the left (right) leg is a fulcrum, the sensing subunits of the sensing unit 122 may measure continuously distances d₀ to dₙ and angles a₀ to aₙ of the branch of the lower leg. After the operation of the processing unit 124, the coordinates R₀ to Rₙ corresponding to the obstacle contour based on the origin of the processing unit 124 are obtained. If the coordinate system is set with the fulcrum (i.e., the bottom of branch of the lower leg) as the origin, the coordinate x of k-th target point Rₖ is Rₖ[X]=L^{∗}cos(aₖ)+dₖ^{∗}cos(aₖ+δ); the coordinate y is Rₖ[Y]=L^{∗}sin(aₖ)+dₖ^{∗}sin(aₖ+δ), wherein 8 is the angle between the sensing unit 122 and the branch of the lower leg, and L is the length of the branch of the lower leg.

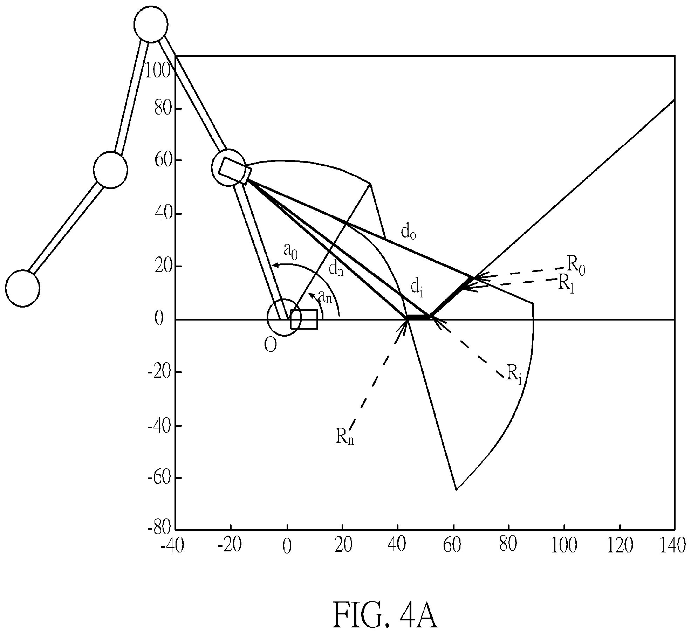

After obtaining the statistics of Rₖ[X], Rₖ[Y] mentioned above, the processing unit 124 may determine whether there exists a special frontal terrain in the moving direction according to the contour coordinates. For example, FIG. 4A is a schematic diagram of the processing unit 124 determining the frontal terrain in the moving direction according to an embodiment of the present invention. In this example, the sensing unit 122 comprises two sensing subunits, the one is disposed on the branch 104, and the other one is deposed on the branch 108, wherein the frontal terrains comprise uphill. As shown in FIG. 4A, when the user walks naturally and lifts his/her left leg, the sensing subunit of the sensing unit 122 located on the right lower leg measures a plurality of target points R₀ to Rₙ. As the index k of the target point increases, both of aₖ and dₖ decrease. As can be known by the geometric calculation, the Y coordinate Rₖ[Y] of the target point Rₖ decreases as the X coordinates Rₖ[X] decreases. Therefore, the embodiment determines that the frontal terrain of the exoskeleton system 10 in the moving direction is an uphill terrain, and the processing unit 124 may accordingly generate a control signal CTRL to adjust the motor 116, to adjust the location of the next touchdown point corresponding to the branch 104 of the left lower leg.

Furthermore, when the user walks naturally and lifts his/her left leg, the bottom of the branch 108 corresponding to the right lower leg is the fulcrum. If the processing unit 124 determines that the frontal terrain is an uphill terrain according to the measurement result of the sensing unit 122, then comparing with the touchdown point of the flat terrain, the vertical distance of the next touchdown point of the branch 104 of the left lower leg is shorter. In this situation, the control device 112 may adjust the operation of the motor 116 via the control signal CTRL, to make the next touchdown point of the branch 104 of the left lower leg to fit the uphill terrain; that is, the next touchdown point is higher than the original (flat terrain) touchdown point to avoid improper auxiliary force and ensure that the user can walk smoothly.

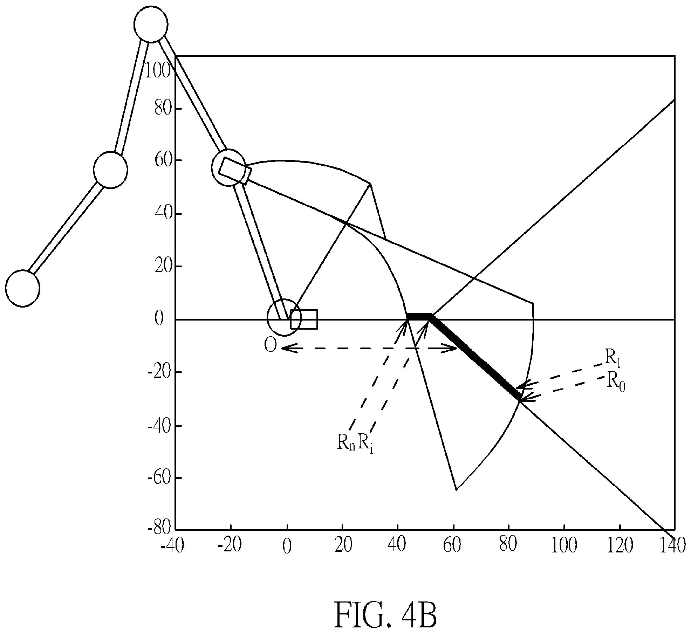

Similar to FIG. 4A, please continue to refer to FIG. 4B to 4E, which are schematic diagrams of the processing unit 124 determining the frontal terrains in the moving direction according to an embodiment of the present invention. In FIG. 4B, the sensing unit 122 measures a plurality of target points R₀ to Rₙ, and the processing unit 124 determines that the Y coordinate Rₜ[Y] of a target point Rₜ within the target points Rᵢ to R₀ decreases as the X coordinates Rₜ[X] increases. Therefore, the embodiment determines that the frontal terrain of the exoskeleton system 10 in the moving direction is a downhill terrain, and the control device 112 may adjust the motor 116 via the control signal CTRL, to make a next touchdown point of branch 104 of the left lower leg to fit the download terrain; that is, the next touchdown point is lower than the original (flat terrain) touchdown point to avoid improper auxiliary force and ensure that the user can walk smoothly.

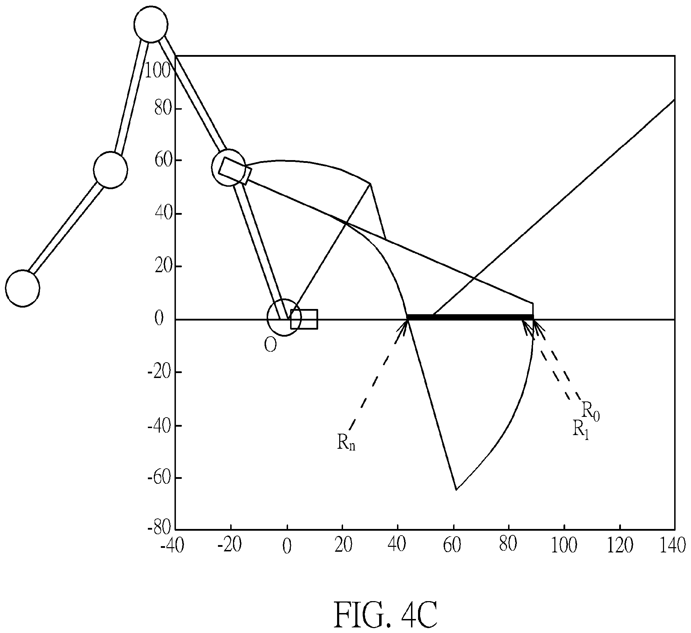

In FIG. 4C, the sensing unit 122 measures a plurality of target points R₀ to Rₙ, and the processing unit 124 determines that the Y coordinate Rₜ[Y] of a target point Rₜ within the target points Rᵢ to R₀ is kept the same no matter how the X coordinate Rₜ[X] changes. Therefore, the embodiment determines the frontal terrain of the exoskeleton system 10 in the moving direction is an flat terrain, and the control device 112 may adjust the motor 116 via the control signal CTRL, to make a next touchdown point of the branch 104 of the left lower leg to fit the flat terrain; that is, the next touchdown point is near to the original touchdown point to avoid improper auxiliary force and ensure that the user can walk smoothly.

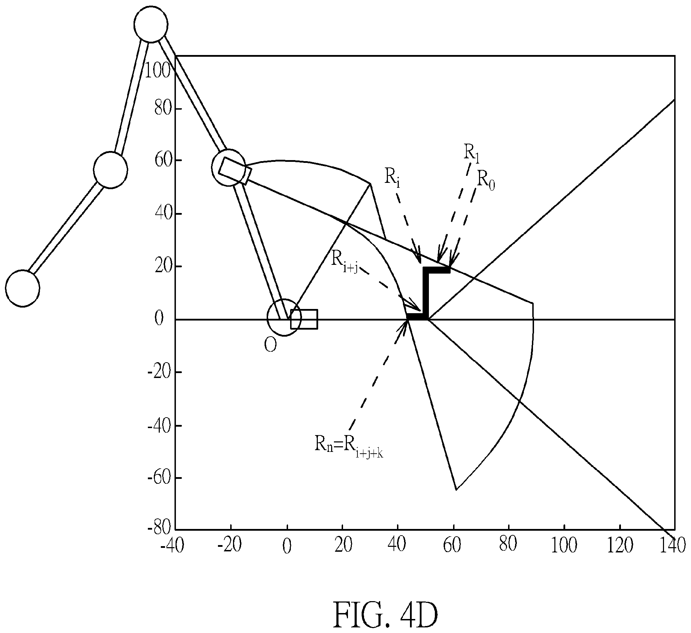

In FIG. 4D, the sensing unit 122 measures a plurality of target points R₀ to Rₙ, and the processing unit 124 determines that the X coordinate Rₜ[X] of a target point Rₜ within the target points Rᵢ to R₀ is kept the same while the Y coordinate Rₜ[Y] is different (for example, considering coordinates of a first target point Rₐ and a second target point R_{b} within the target points Rᵢ to R₀, if the X coordinate Rₐ[X] (the first value) of the first target point Rₐ and the Y coordinate Rₐ[Y] (the second value) are taken as basis, when the X coordinate R_{b}[X] of the second target point R_{b} is not greater than the first value Rₐ[X], but the Y coordinate R_{b}[Y] is greater than the second value (Rₐ[Y])), the embodiment determines the frontal terrain of the exoskeleton system 10 in the moving direction is a bump. Meanwhile, the processing unit 124 may determine the size of the bump according to other target points (such as R_{c}, R_{d} ...) within the target points Rᵢ to R₀.

Next, the processing unit 124 further determines that the Y coordinate Rₛ[Y] of a target point Rₛ within the target points Rᵢ to R₀ is kept the same no matter how the X coordinate Rₛ[X] changes, which corresponds to the flat terrain. Therefore, combining the determining results of the target points Rₜ and Rₛ, the processing unit 124 may determine that the frontal terrain of the exoskeleton system 10 in the moving direction is an ascending stair, and the control device 112 may adjust the motor 116 via the control signal CTRL, to make a next touchdown point of branch 104 of the left lower leg to fit the ascending stair; that is, the next touchdown point is on the plate of the ascending stair to avoid improper auxiliary force and ensure that the user can walk smoothly.

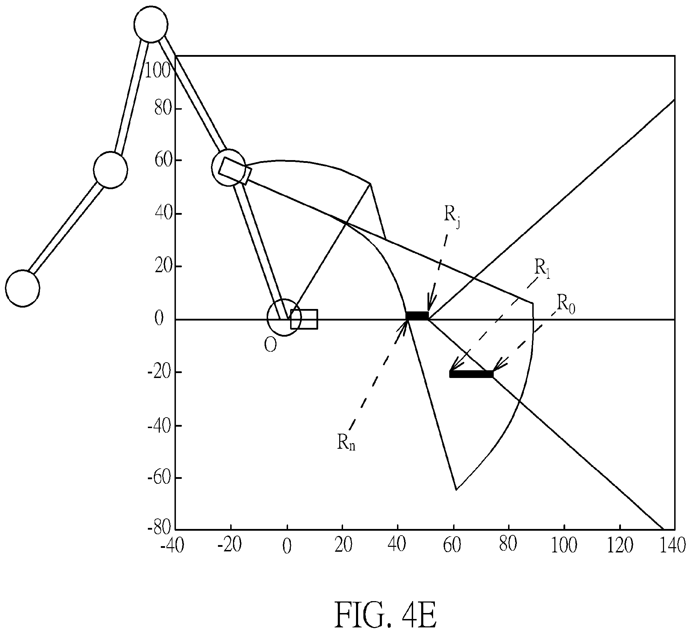

In FIG. 4E, the sensing unit 122 measures a plurality of target points R₀ to Rₙ, and the processing unit 124 determines that the Y coordinate Rₜ[Y] of a target point Rₜ within the target points Rᵢ to R₀ is kept the same no matter how the X coordinate Rₜ[X] changes, and the Y coordinate Rₛ[Y] of a target point Rₛ within the target points Rᵢ to R₀ is kept the same no matter how the X coordinate Rₛ[X] changes. The processing unit 124 may determine that the frontal terrain of the exoskeleton system 10 in the moving direction is a flat terrain, and the processing unit 124 may further determine that the frontal terrain of the exoskeleton system 10 in the moving direction is a descending stair according to Rₜ[Y]>Rₛ[Y]. Thus, the control device 112 may adjust the motor 116 via the control signal CTRL, to make a next touchdown point of the branch 104 of the left lower leg to fit the descending stair; that is, the next touchdown point is on the plate of the descending stair to avoid improper auxiliary force and ensure that the user can walk smoothly.

Therefore, via the determining methods shown in FIG. 4A to 4E, the processing unit 124 may determine that the frontal terrain of the exoskeleton system 10 in the moving direction is an uphill, downhill, flat, bump, ascending stair, and descending stair terrain, and accordingly adjust the driving device 110. For example, when the user walks naturally and lifts his/her left leg, the bottom of the branch 108 corresponding to the right lower leg is the fulcrum, the processing unit 124 determines the frontal terrain is an uphill, downhill, flat, bump, ascending stair, and descending stair, and adjusts the driving device 110 to make a next touchdown point of branch 104 of the left lower leg to fit the terrain. When the processing unit 124 determines that the frontal terrain is a bump, and if the bump does not hinder walking, then the processing unit 124 adjusts the driving device 110 to make the bottom of branch cross the bump; if the horizontal position of the bump is the same as the original step, then the processing unit 124 adjusts the driving device 110 to make the bottom of branch to be on the bump; or, if the vertical height of the bump is too large to cross, then the processing unit 124 adjusts the driving device 110 to make the exoskeleton system 10 to bypass the bump, shows a warning message to the user, or stops walking. In this way, the exoskeleton system 10 may adjust the auxiliary force corresponding to the frontal terrain by measuring the frontal terrain in the moving direction, and ensure that the user can walk smoothly without the user's indication.

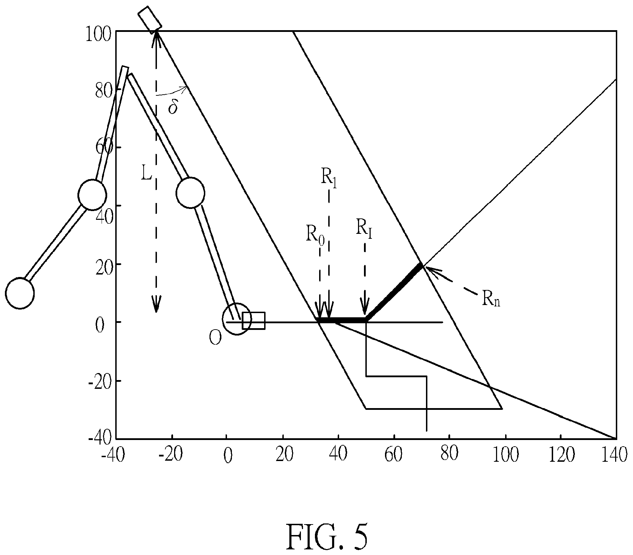

Notably, FIG. 3 and FIG. 4A to 4E illustrate the terrain determining method of the processing unit 124 in the condition that the sensing unit 122 comprises two sensing subunits, which are disposed on the branches of the left lower leg and the right lower leg respectively, the processing unit 124. However, not limited herein, the sensing unit 122 may be disposed on any location according to different system requirements. For example, please refer to FIG. 5, which is a schematic diagram of the sensing unit 122 measuring a distance and a direction of a target point according to an embodiment of the present invention. In this example, because the sensing unit 122 is disposed on the user's waist, the geometric operation implemented by the processing unit 124 corresponding to the target point Rₖ should be adjusted as follows: the coordinate X is Rₖ[X]=L^{∗}cos(90°)+dₖ^{∗}cos(90°+δ), and the coordinate Y is Rₖ[Y]=L^{∗}sin(90o)+dₖ^{∗}sin(90°+δ), wherein δ is the angel between the sensing unit 122 and the user's waist, and L is the height of the location on which the sensing unit 122 is disposed. The rest details of determining the terrain according to the coordinates of the target points may be referred to the above, which are not narrated herein for brevity.

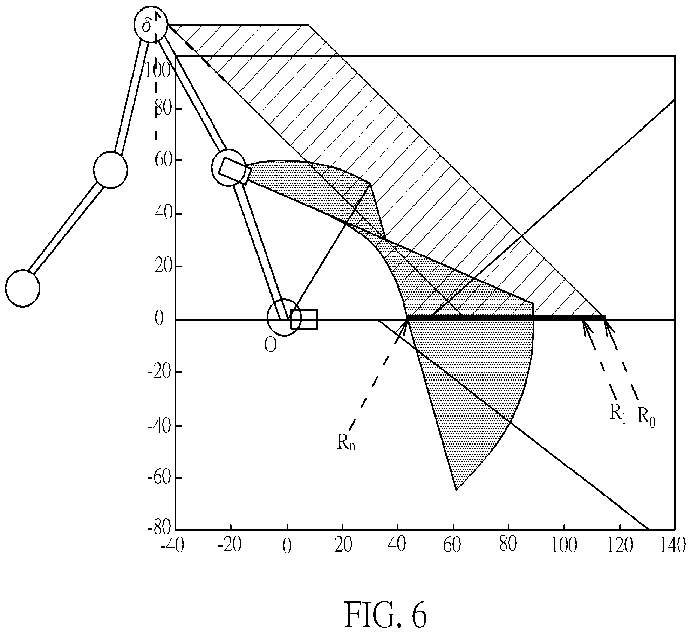

In addition, as mentioned above, the sensing unit 122 may be implemented by a plurality of sensing subunits, and the sensing subunits may not limit to be disposed on the waist or legs. For example, please refer to FIG. 6, which is a schematic diagram of the sensing unit 122 comprising two sensing subunits disposed at locations corresponding to user's waist and leg in the exoskeleton system 10 according to an embodiment of the present invention. As shown in FIG. 6, because the two sensing subunits of the sensing unit 122 are disposed on the user's waist and leg respectively to measure the target points from different heights, the determining results of the processing unit 124 are more precisely to fit the practical terrain, to enhance efficiency. Notably, increasing the number of sensing subunits may increase the sensing range and make the sensing results more accurate. And the methods of determining the frontal terrain of the exoskeleton system 10 for each of the sensing subunits are similar to those of the single sensing unit, which are not narrated herein for brevity.

In addition, in an embodiment of the present invention, the frontal terrain may be further classified. For example, the uphill terrain may be further classified into extremely gentle slopes with a slope of 5°, gentle slopes with a slope of 5°-15 °, gentle steep slopes with a slope of 15°-25°, steep slopes with a slope of 25°-35°, and not limited herein. The control device 112 may adjust the driving device 110 according to different terrains and the requirements by the user.

Furthermore, in an embodiment, the exoskeleton system 10 may comprise an input device, which provides the user to adjust the corresponding relation between the terrains and the driving device 110 or to limit the moving direction to the exoskeleton system 10. For example, if the exoskeleton system 10 encounters an uphill terrain with a slope more than 30°, then the exoskeleton system 10 will bypass the uphill terrain instead of climbing the uphill terrain, and not limited herein.

On the other hand, the trunk 100 and the branches 102, 104, 106 and 108 may be made of metal, plastic or composite materials, and not limited herein. In an embodiment, each branch may further comprise sub-branches, wherein each (sub-)branch may comprise any number of sub-driving devices and sub-control devices, to adjust a partial or whole of the branch for the more detailed local actions according to different frontal terrains. In addition, the driving device 110 is not limited to be implemented by motors, and may be a pneumatic or hydraulic device. In an embodiment, the control device 112 may control the driving device 110 directly via an interface or indirectly via an inter-process communication, and the control device 112 may transmit only the measurement results of the frontal terrain measured by the sensing unit 122 in the moving direction, which may be adjusted by a sub-processing unit of the driving device 110. The control methods of the driving device 110 are well-known to those skilled in the art, which are not narrated herein for brevity.

In an embodiment, the sensing unit 122 may use optical, laser, radio, or ultrasonic methods to actively or passively sense terrain data. The sensing unit 122 may also be implemented by three-axis, six-axis, or nine-axis sensors, and may can transmit data to the processing unit 124 via a wire or wirelessly. In an embodiment, each unit may be implemented by an application-specific integrated circuit (ASIC). In an embodiment, the processing unit 124 may comprise a processor and a storage unit. The processor may be a processing unit, an application processor (AP) or a digital signal processor (DSP), wherein the processing unit may be a central processing unit (CPU), a graphics processing unit (GPU) or a tensor processing unit (TPU), and not limited thereto. The storage unit may be a memory, which may be a non-volatile memory, such as an electrically erasable programmable read-only memory (EEPROM) or a flash memory, and not limited thereto.

In an embodiment, the control device 112 may start to perform the control process for determining the frontal terrain in the moving direction only when detecting new step. For example, a step sensor may be configured to save the power consumption or reduce the interference to the exoskeleton system 10 when the user walks, to avoid discomfort to the user. The method of configuring the step sensor is known to those skilled in the art, which is not narrated herein for brevity.

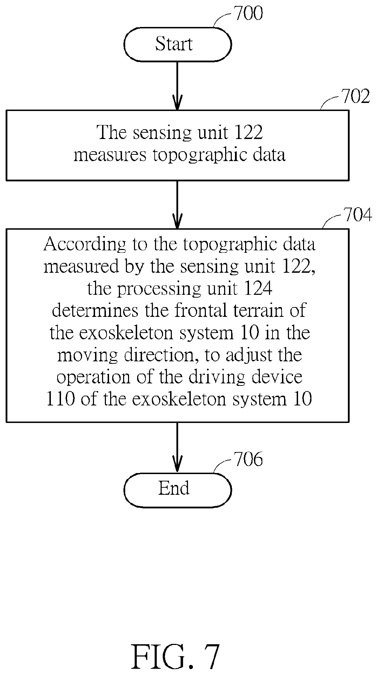

In addition, the operation of the control device 112 may be summarized to a control process 70, as shown in FIG. 7. The control process 70 comprises the following step:
Step 700: Start.
Step 702: The sensing unit 122 measures topographic data.
Step 704: According to the topographic data measured by the sensing unit 122, the processing unit 124 determines the frontal terrain of the exoskeleton system 10 in the moving direction, to adjust the operation of the driving device 110 of the exoskeleton system 10.
Step 706: End.

The detailed operation of the control process 70 may be referred to the foregoing description, which is not narrated herein for brevity.

Notably, the embodiments stated in the above are utilized for illustrating the concept of the present application. Those skilled in the art may make modifications and alterations accordingly, and not limited herein. Therefore, as long as the exoskeleton system may measure the frontal terrain in the moving direction and adjust the auxiliary force corresponding to the frontal terrain, the requirements of the present application are satisfied and within the scope of the present application.

In summary, to assist the user to walk or run, the exoskeleton system of the present invention measures the frontal terrain in the moving direction and adjusts the auxiliary force corresponding to the frontal terrain without the indication of the user. Therefore, the present invention can effectively improve the convenience of use and the smoothness of movement.

## Claims

1. A control device (112), applied to an exoskeleton system (10), comprising:
a sensing unit (122), configured to measure topographic data; and
a processing unit (124), coupled to the sensing unit (122), configured to determine a frontal terrain of the exoskeleton system (10) in a moving direction according to a measurement of the sensing unit (122) to adjust an operation of a driving device (110) of the exoskeleton system (10);
wherein the sensing unit (122) is configured to measure a distance and a direction of at least one measuring point corresponding to the sensing unit (122) to measure the topographic data, wherein the at least one measuring point is located in front of the exoskeleton system (10) in the moving direction.

2. An exoskeleton system (10), comprising:
at least one branch (102, 104, 106, 108);
a driving device (110), connected to the at least one branch (102, 104, 106, 108), configured to drive the at least one branch (102, 104, 106, 108) according to a control signal (CTRL); and
a control device (112), comprising:
a sensing unit (122), configured to measure a topographic data; and
a processing unit (124), coupled to the sensing unit (122) and the driving device (110), configured to determine a frontal terrain of the exoskeleton system (10) in a moving direction according to a measurement of the sensing unit (122), to generate the control signal (CTRL) and to adjust an operation of a driving device (110);
wherein the sensing unit (122) is configured to measure a distance and a direction of at least one measuring point corresponding to the sensing unit (122) to measure the topographic data, wherein the at least one measuring point is located in front of the exoskeleton system (10) in the moving direction.

3. The control device (112) of claim 1 or the exoskeleton system (10) of claim 2, **characterised in that**
when the measurement of the sensing unit (122) shows that at least one vertical position of the at least one measuring point is higher than a current vertical position of a bottom of a branch of the exoskeleton system (10), the processing unit (124) determines that the frontal terrain in the moving direction of the exoskeleton system (10) is an uphill terrain; and
the processing unit (124) is further configured to calculate a grade and a vertical height of the uphill terrain to adjust the operation of the driving device (110) for making a next touchdown point of the bottom of the branch in the moving direction fit the height of the uphill terrain.

4. The control device (112) of claim 1 or the exoskeleton system (10) of claim 2, **characterised in that**
when the measurement of the sensing unit (122) shows that at least one vertical position of the at least one measuring point is lower than a current vertical position of a bottom of a branch of the exoskeleton system (10), the processing unit (124) determines that the frontal terrain in the moving direction of the exoskeleton system (10) is a downhill terrain; and
the processing unit (124) is further configured to calculate a grade and a vertical height of the downhill terrain to adjust the operation of the driving device (110) for making a next touchdown point of the bottom of the branch in the moving direction fit the height of the downhill terrain.

5. The control device (112) of claim 1 or the exoskeleton system (10) of claim 2, **characterised in that**
when the measurement of the sensing unit (122) shows that at least one vertical position of the at least one measuring point is similar to a current vertical position of a bottom of a branch of the exoskeleton system (10), the processing unit (124) determines that the frontal terrain in the moving direction of the exoskeleton system (10) is a flat terrain; and
the processing unit (124) is further configured to adjust the operation of the driving device (110) for making a next touchdown point of the bottom of the branch in the moving direction fit the flat terrain.

6. The control device (112) of claim 1 or the exoskeleton system (10) of claim 2, **characterised in that**
when the measurement of the sensing unit (122) shows that a horizontal distance between the at least one measuring point and a bottom of a branch of the exoskeleton system (10) is not greater a first value, but a vertical distance between the measuring point and the bottom is greater than a second value, the processing unit (124) determines that the frontal terrain in the moving direction of the exoskeleton system (10) is a bump; and
the processing unit (124) is further configured to calculate a size of the bump to adjust the operation of the driving device (110) for making the bottom of the branch in the moving direction cross, fall upon, or bypass the bump or stop moving.

7. The control device (112) of claim 1 or the exoskeleton system (10) of claim 2, **characterised in that**
when the measurement of the sensing unit (122) shows that the at least one measuring point is roughly located to a plane, and a vertical position is higher than a current vertical position of a bottom of a branch of the exoskeleton system (10), the processing unit (124) determines that the frontal terrain in the moving direction of the exoskeleton system (10) is an ascending stair; and
the processing unit (124) is further configured to calculate a step height of the ascending stair to adjust the operation of the driving device (110) for making a next touchdown point of the bottom of the branch in the moving direction fit the ascending stair.

8. The control device (112) of claim 1 or the exoskeleton system (10) of claim 2, **characterised in that**
when the measurement of the sensing unit (122) shows that the at least one measuring point is roughly located to a plane, and a vertical position is lower than a current vertical position of a bottom of a branch of the exoskeleton system (10), the processing unit (124) determines that the frontal terrain in the moving direction of the exoskeleton system (10) is a descending stair; and
the processing unit (124) is further configured to calculate a step height of the descending stair to adjust the operation of the driving device (110) for making a next touchdown point of the bottom of the branch in the moving direction fit the descending stair.

9. A control method (70), applied to an exoskeleton system (10), comprising:
measuring a topographic data (702); and
determining a frontal terrain of the exoskeleton system (10) in a moving direction according to the topographic data, to adjust an operation of a driving device (110) of the exoskeleton system (10) (704);
wherein the step for measuring the topographic data (702) comprises a distance and a direction of at least one measuring point corresponding to the exoskeleton system (10), wherein the at least one measuring point is located in front of the exoskeleton system (10) in the moving direction.

10. The control method (70) of claim 9, **characterised by** further comprising:
when at least one vertical position of the at least one measuring point is higher than a current vertical position of a bottom of a branch of the exoskeleton system (10), determining that the frontal terrain in the moving direction of the exoskeleton system (10) is an uphill terrain; and
calculating a grade and a vertical height of the uphill terrain and adjusting the operation of the driving device (110) to make a next touchdown point of the bottom of the branch in the moving direction fit the height of the uphill terrain.

11. The control method (70) of claim 9, **characterised by** further comprising:
when at least one vertical position of the at least one measuring point is lower than a current vertical position of a bottom of a branch of the exoskeleton system (10), determining that the frontal terrain in the moving direction of the exoskeleton system (10) is a downhill terrain; and
calculating a grade and a vertical height of the downhill terrain and adjusting the operation of the driving device (110) to make a next touchdown point of the bottom of the branch in the moving direction fit the height of the downhill terrain.

12. The control method (70) of claim 9, **characterised by** further comprising:
when at least one vertical position of the at least one measuring point is similar to a current vertical position of a bottom of a branch of the exoskeleton system (10), determining that the frontal terrain in the moving direction of the exoskeleton system (10) is a flat terrain; and
adjusting the operation of the driving device (110) to make a next touchdown point of the bottom of the branch in the moving direction fit the flat terrain.

13. The control method (70) of claim 9, **characterised by** further comprising:
when a horizontal distance between the at least one measuring point and a bottom of a branch of the exoskeleton system (10) is not greater a first value, but a vertical distance between the measuring point and the bottom is greater than a second value, determining that the frontal terrain in the moving direction of the exoskeleton system (10) is a bump; and
calculating a size of the bump and adjusting the operation of the driving device (110) to make the bottom of the branch in the moving direction cross, fall upon, or bypass the bump or stop moving.

14. The control method (70) of claim 9, **characterised by** further comprising:
when the at least one measuring point is roughly located to a plane, and a vertical position is higher than a current vertical position of a bottom of a branch of the exoskeleton system (10), determining that the frontal terrain in the moving direction of the exoskeleton system (10) is an ascending stair; and
calculating a step height of the ascending stair and adjusting the operation of the driving device (110) to make a next touchdown point of the bottom of the branch in the moving direction fit the ascending stair.

15. The control method (70) of claim 9, **characterised by** further comprising:
when the at least one measuring point is roughly located to a plane, and a vertical position is lower than a current vertical position of a bottom of a branch of the exoskeleton system (10), determining that the frontal terrain in the moving direction of the exoskeleton system (10) is a descending stair; and
calculating a step height of the descending stair and adjusting the operation of the driving device (110) to make a next touchdown point of the bottom of the branch in the moving direction fit the descending stair.

## Patentansprüche

1. Steuervorrichtung (112), verwendbar an einem Exoskelettsystem (10), welche umfasst:
eine Erfassungseinheit (122), die ausgestaltet ist, topographische Daten zu erfassen; und
eine Verarbeitungseinheit (124), die mit der Erfassungseinheit (122) gekoppelt und ausgestaltet ist, ein vorderes Gelände des Exoskelettsystems (10) in einer Bewegungsrichtung gemäß einer Erfassung der Erfassungseinheit (122) zu bestimmen, um einen Betrieb einer Antriebsvorrichtung (110) des Exoskelettsystems (10) anzupassen;
worin die Erfassungseinheit (122) ausgestaltet ist, einen Abstand und eine Richtung von mindestens einem Messpunkt entsprechend der Erfassungseinheit (122) zu erfassen, um die topographischen Daten zu erfassen, wobei der mindestens eine Messpunkt in der Bewegungsrichtung vor dem Exoskelettsystem (10) angeordnet ist.

2. Exoskelettsystem (10), welches umfasst:
mindestens einen Arm (102, 104, 106, 108);
eine Antriebsvorrichtung (110), die mit dem mindestens einen Arm (102, 104, 106, 108) verbunden ist und ausgestaltet ist, den mindestens einen Arm (102, 104, 106, 108) gemäß einem Steuersignal (CTRL) anzutreiben; und
eine Steuervorrichtung (112), die umfasst:
eine Erfassungseinheit (122), die ausgestaltet ist, topographische Daten zu erfassen; und
eine Verarbeitungseinheit (124), die mit der Erfassungseinheit (122) und der Antriebsvorrichtung (110) gekoppelt ist, die ausgestaltet ist, ein vorderes Gelände des Exoskelettsystems (10) in einer Bewegungsrichtung gemäß einer Erfassung der Erfassungseinheit (122) zu bestimmen, um das Steuersignal (CTRL) zu erzeugen und um einen Betrieb einer Antriebsvorrichtung (110) anzupassen;
worin die Erfassungseinheit (122) ausgestaltet ist, einen Abstand und eine Richtung von mindestens einem Messpunkt entsprechend der Erfassungseinheit (122) zu erfassen, um die topographischen Daten zu erfassen, wobei der mindestens eine Messpunkt in der Bewegungsrichtung vor dem Exoskelettsystem (10) angeordnet ist.

3. Steuereinrichtung (112) nach Anspruch 1 oder Exoskelettsystem (10) nach Anspruch 2, **dadurch gekennzeichnet, dass**,
wenn die Erfassung der Erfassungseinheit (122) ergibt, dass mindestens eine vertikale Position des mindestens einen Messpunktes höher ist als eine aktuelle vertikale Position eines Unterendes eines Armes des Exoskelettsystems (10), die Verarbeitungseinheit (124) feststellt, dass das vordere Gelände in der Bewegungsrichtung des Exoskelettsystems (10) ein ansteigendes Gelände ist; und
die Verarbeitungseinheit (124) ferner ausgestaltet ist, eine Steigung und eine vertikale Höhe des ansteigenden Geländes zu berechnen, um den Betrieb der Antriebsvorrichtung (110) derart einzustellen, dass ein nächster Aufsetzpunkt des Unterendes des Armes in der Bewegungsrichtung an die Höhe des ansteigenden Geländes angepasst wird.

4. Steuereinrichtung (112) nach Anspruch 1 oder Exoskelettsystem (10) nach Anspruch 2, **dadurch gekennzeichnet, dass**,
wenn die Erfassung der Erfassungseinheit (122) ergibt, dass mindestens eine vertikale Position des mindestens einen Messpunktes niedriger ist als eine aktuelle vertikale Position eines Unterendes eines Armes des Exoskelettsystems (10), die Verarbeitungseinheit (124) bestimmt, dass das vordere Gelände in der Bewegungsrichtung des Exoskelettsystems (10) ein abfallendes Gelände ist; und
die Verarbeitungseinheit (124) ferner ausgestaltet ist, eine Steigung und eine vertikale Höhe des abfallenden Geländes zu berechnen, um den Betrieb der Antriebsvorrichtung (110) derart einzustellen, dass ein nächster Aufsetzpunkt des Unterendes des Armes in der Bewegungsrichtung an die Höhe des abfallenden Geländes angepasst wird.

5. Steuereinrichtung (112) nach Anspruch 1 oder Exoskelettsystem (10) nach Anspruch 2, **dadurch gekennzeichnet, dass**,
wenn die Erfassung der Erfassungseinheit (122) ergibt, dass mindestens eine vertikale Position des mindestens einen Messpunktes einer aktuellen vertikalen Position eines Unterendes eines Armes des Exoskelettsystems (10) ähnlich ist, die Verarbeitungseinheit (124) bestimmt, dass das vordere Gelände in der Bewegungsrichtung des Exoskelettsystems (10) ein flaches Gelände ist; und
die Verarbeitungseinheit (124) ferner ausgestaltet ist, den Betrieb der Antriebsvorrichtung (110) derart einzustellen, dass ein nächster Aufsetzpunkt des Unterendes des Armes in der Bewegungsrichtung in das flache Gelände passt.

6. Steuereinrichtung (112) nach Anspruch 1 oder Exoskelettsystem (10) nach Anspruch 2, **dadurch gekennzeichnet, dass**,
wenn die Erfassung der Erfassungseinheit (122) ergibt, dass ein horizontaler Abstand zwischen dem mindestens einen Messpunkt und einem Unterende eines Armes des Exoskelettsystems (10) nicht größer ist als ein erster Wert, aber ein vertikaler Abstand zwischen dem Messpunkt und dem Unterende größer ist als ein zweiter Wert, die Verarbeitungseinheit (124) bestimmt, dass das vordere Gelände in der Bewegungsrichtung des Exoskelettsystems (10) eine Bodenwelle ist; und
die Verarbeitungseinheit (124) ferner ausgestaltet ist, eine Größe der Bodenwelle zu berechnen, um den Betrieb der Antriebsvorrichtung (110) derart anzupassen, dass das Unterende des Armes in der Bewegungsrichtung die Bodenwelle überquert, darauf fällt oder umgeht oder aufhört, sich zu bewegen.

7. Steuereinrichtung (112) nach Anspruch 1 oder Exoskelettsystem (10) nach Anspruch 2, **dadurch gekennzeichnet, dass**,
wenn die Erfassung der Erfassungseinheit (122) zeigt, dass der mindestens eine Messpunkt ungefähr in einer Ebene liegt und eine vertikale Position höher ist als eine aktuelle vertikale Position eines Unterendes eines Armes des Exoskelettsystems (10), die Verarbeitungseinheit (124) bestimmt, dass das vordere Gelände in der Bewegungsrichtung des Exoskelettsystems (10) eine ansteigende Treppe ist; und
die Verarbeitungseinheit (124) ferner ausgestaltet ist, eine Stufenhöhe der ansteigenden Treppe zu berechnen, um den Betrieb der Antriebsvorrichtung (110) derart anzupassen, dass ein nächster Aufsetzpunkt des Unterendes des Armes in der Bewegungsrichtung auf die ansteigende Treppe passt.

8. Steuereinrichtung (112) nach Anspruch 1 oder Exoskelettsystem (10) nach Anspruch 2, **dadurch gekennzeichnet, dass**,
wenn die Erfassung der Erfassungseinheit (122) zeigt, dass der mindestens eine Messpunkt ungefähr in einer Ebene liegt und eine vertikale Position niedriger ist als eine aktuelle vertikale Position eines Unterendes eines Armes des Exoskelettsystems (10), die Verarbeitungseinheit (124) bestimmt, dass das vordere Gelände in der Bewegungsrichtung des Exoskelettsystems (10) eine absteigende Treppe ist; und
die Verarbeitungseinheit (124) ferner ausgestaltet ist, dass sie eine Stufenhöhe der absteigenden Treppe berechnet, um den Betrieb der Antriebsvorrichtung (110) derart anzupassen, dass ein nächster Aufsetzpunkt des Unterendes des Arms in der Bewegungsrichtung auf die absteigende Treppe passt.

9. Steuerungsverfahren (70), verwendbar bei einem Exoskelettsystem (10), wobei das Verfahren umfasst:
Erfassen von topographischen Daten (702); und
Bestimmen eines vorderen Geländes des Exoskelettsystems (10) in einer Bewegungsrichtung gemäß den topographischen Daten, um einen Betrieb einer Antriebsvorrichtung (110) des Exoskelettsystems (10) anzupassen (704);
wobei der Schritt zum Erfassen der topographischen Daten (702) einen Abstand und eine Richtung von mindestens einem Messpunkt in Bezug zu dem Exoskelettsystem (10) umfasst,
wobei sich der mindestens eine Messpunkt in der Bewegungsrichtung vor dem Exoskelettsystem (10) befindet.

10. Steuerungsverfahren (70) nach Anspruch 9, **dadurch gekennzeichnet, dass** es ferner umfasst:
Bestimmen, dass das vordere Gelände in der Bewegungsrichtung des Exoskelettsystems (10) ein ansteigendes Gelände ist, wenn mindestens eine vertikale Position des mindestens einen Messpunktes höher ist als eine aktuelle vertikale Position eines Bodens eines Armes des Exoskelettsystems (10); und
Berechnen einer Steigung und einer vertikalen Höhe des ansteigenden Geländes und Anpassen des Betriebs der Antriebsvorrichtung (110), um einen nächsten Aufsetzpunkt des Unterendes des Armes in der Bewegungsrichtung an die Höhe des ansteigenden Geländes anzupassen.

11. Steuerungsverfahren (70) nach Anspruch 9, **dadurch gekennzeichnet, dass** es ferner umfasst:
Bestimmen, dass das vordere Gelände in der Bewegungsrichtung des Exoskelettsystems (10) ein abfallendes Gelände ist, wenn mindestens eine vertikale Position des mindestens einen Messpunktes niedriger ist als eine aktuelle vertikale Position eines Unterendes eines Armes des Exoskelettsystems (10); und
Berechnen einer Steigung und einer vertikalen Höhe des abfallenden Geländes und Anpassen des Betriebs der Antriebsvorrichtung (110), um einen nächsten Aufsetzpunkt des Unterendes des Armes in der Bewegungsrichtung an die Höhe des abfallenden Geländes anzupassen.

12. Steuerungsverfahren (70) nach Anspruch 9, **dadurch gekennzeichnet, dass** es ferner umfasst:
Bestimmen, dass das vordere Gelände in der Bewegungsrichtung des Exoskelettsystems (10) ein flaches Gelände ist, wenn mindestens eine vertikale Position des mindestens einen Messpunktes ähnlich einer aktuellen vertikalen Position eines Bodens eines Armes des Exoskelettsystems (10) ist; und
Anpassen des Betriebs der Antriebsvorrichtung (110), um einen nächsten Aufsetzpunkt des Unterendes des Armes in der Bewegungsrichtung an das flache Gelände anzupassen.

13. Steuerungsverfahren (70) nach Anspruch 9, **dadurch gekennzeichnet, dass** es ferner umfasst:
Bestimmen, dass das vordere Gelände in der Bewegungsrichtung des Exoskelettsystems (10) eine Bodenwelle ist, wenn ein horizontaler Abstand zwischen dem mindestens einen Messpunkt und einem Unterende eines Armes des Exoskelettsystems (10) nicht größer als ein erster Wert ist, aber ein vertikaler Abstand zwischen dem Messpunkt und dem Boden größer als ein zweiter Wert ist; und
Berechnen einer Größe der Bodenwelle und Anpassen des Betriebs der Antriebsvorrichtung (110), um zu bewirken, dass das Unterende des Armes in der Bewegungsrichtung die Bodenwelle überquert, auf diese fällt, diese umgeht oder aufhört, sich zu bewegen.

14. Steuerungsverfahren (70) nach Anspruch 9, **dadurch gekennzeichnet, dass** es ferner umfasst:
Bestimmen, dass das vordere Gelände in der Bewegungsrichtung des Exoskelettsystems (10) eine ansteigende Treppe ist, wenn der mindestens eine Messpunkt ungefähr in einer Ebene liegt und eine vertikale Position höher ist als eine aktuelle vertikale Position eines Unterendes eines Armes des Exoskelettsystems (10); und
Berechnen einer Stufenhöhe der ansteigenden Treppe und Anpassen des Betriebs der Antriebsvorrichtung (110), um einen nächsten Aufsetzpunkt des Unterendes des Armes in der Bewegungsrichtung an die ansteigende Treppe anzupassen.

15. Steuerungsverfahren (70) nach Anspruch 9, **dadurch gekennzeichnet, dass** es ferner umfasst:
Bestimmen, dass das vordere Gelände in der Bewegungsrichtung des Exoskelettsystems (10) eine absteigende Treppe ist, wenn der mindestens eine Messpunkt ungefähr in einer Ebene liegt und eine vertikale Position niedriger ist als eine aktuelle vertikale Position eines Unterendes eines Armes des Exoskelettsystems (10); und
Berechnen einer Stufenhöhe der absteigenden Treppe und Anpassen des Betriebs der Antriebsvorrichtung (110), um einen nächsten Aufsetzpunkt des Unterendes des Armes in der Bewegungsrichtung an die absteigende Treppe anzupassen.

## Revendications

1. Dispositif de commande (112), appliqué à un système d'exosquelette (10), comprenant:
une unité de détection (122), configurée pour mesurer des données topographiques; et
une unité de traitement (124), couplée à l'unité de détection (122), configurée pour déterminer un terrain frontal du système d'exosquelette (10) dans une direction de déplacement en fonction d'une mesure de l'unité de détection (122) pour ajuster un fonctionnement d'un dispositif d'entraînement (110) du système d'exosquelette (10);
dans lequel l'unité de détection (122) est configurée pour mesurer une distance et une direction d'au moins un point de mesure correspondant à l'unité de détection (122) pour mesurer les données topographiques, dans lequel le au moins un point de mesure est situé à l'avant du système d'exosquelette (10) dans la direction de déplacement.

2. Système d'exosquelette (10), comprenant:
au moins un bras (102, 104, 106, 108);
un dispositif d'entraînement (110), connecté à l'au moins un bras (102, 104, 106, 108), configuré pour entraîner l'au moins un bras (102, 104, 106, 108) selon un signal de commande (CTRL); et un dispositif de commande (112), comprenant:
une unité de détection (122), configurée pour mesurer des données topographiques; et
une unité de traitement (124), couplée à l'unité de détection (122) et au dispositif de conduite (110),
configurée pour déterminer un terrain frontal du système d'exosquelette (10) dans une direction de déplacement selon une mesure de l'unité de détection (122), pour générer le signal de commande (CTRL) et pour ajuster un fonctionnement d'un dispositif d'entraînement (110);
dans lequel l'unité de détection (122) est configurée pour mesurer une distance et une direction d'au moins un point de mesure correspondant à l'unité de détection (122) pour mesurer les données topographiques, dans lequel le au moins un point de mesure est situé à l'avant du système d'exosquelette (10) dans la direction de déplacement.

3. Dispositif de commande (112) de la revendication 1 ou système d'exosquelette (10) de la revendication 2,
**caractérisé en ce que**
lorsque la mesure de l'unité de détection (122) montre qu'au moins une position verticale de l'au moins un point de mesure est supérieure à une position verticale actuelle d'un bas d'un bras du système d'exosquelette (10), l'unité de traitement (124) détermine que le terrain frontal dans la direction de déplacement du système d'exosquelette (10) est un terrain en pente; et
l'unité de traitement (124) est en outre configurée pour calculer une pente et une hauteur verticale du terrain en pente pour ajuster le fonctionnement du dispositif d'entraînement (110) pour faire en sorte qu'un prochain point de toucher du bas du bras dans la direction de déplacement s'adapte à la hauteur du terrain en pente.

4. Dispositif de commande (112) de la revendication 1 ou système d'exosquelette (10) de la revendication 2,
**caractérisé en ce que**
lorsque la mesure de l'unité de détection (122) montre qu'au moins une position verticale du au moins un point de mesure est inférieure à une position verticale actuelle d'un bas d'un bras du système d'exosquelette (10), l'unité de traitement (124) détermine que le terrain frontal dans la direction de déplacement du système d'exosquelette (10) est un terrain en descente; et
l'unité de traitement (124) est en outre configurée pour calculer une pente et une hauteur verticale du terrain en descente pour ajuster le fonctionnement du dispositif d'entraînement (110) pour faire en sorte qu'un prochain point de toucher du bas du bras dans la direction de déplacement s'adapte à la hauteur du terrain en descente.

5. Dispositif de commande (112) de la revendication 1 ou système d'exosquelette (10) de la revendication 2,
**caractérisé en ce que**
lorsque la mesure de l'unité de détection (122) montre qu'au moins une position verticale du au moins un point de mesure est similaire à une position verticale actuelle d'un bas d'un bras du système d'exosquelette (10), l'unité de traitement (124) détermine que le terrain frontal dans la direction de déplacement du système d'exosquelette (10) est un terrain plat; et
l'unité de traitement (124) est en outre configurée pour ajuster le fonctionnement du dispositif d'entraînement (110) pour faire en sorte qu'un prochain point de toucher du bas du bras dans la direction de déplacement s'adapte au terrain plat.

6. Dispositif de commande (112) de la revendication 1 ou système d'exosquelette (10) de la revendication 2,
**caractérisé en ce que**
lorsque la mesure de l'unité de détection (122) montre qu'une distance horizontale entre l'au moins un point de mesure et un bas d'un bras du système d'exosquelette (10) n'est pas supérieure à une première valeur, mais qu'une distance verticale entre le point de mesure et le bas est supérieure à une deuxième valeur, l'unité de traitement (124) détermine que le terrain frontal dans la direction de déplacement du système d'exosquelette (10) est une bosse; et
l'unité de traitement (124) est en outre configurée pour calculer une taille de la bosse afin d'ajuster le fonctionnement du dispositif d'entraînement (110) pour que le bas du bras dans la direction de déplacement traverse, tombe sur, ou contourne la bosse ou arrête de se déplacer.

7. Dispositif de commande (112) de la revendication 1 ou système d'exosquelette (10) de la revendication 2,
**caractérisé en ce que**
lorsque la mesure de l'unité de détection (122) montre que le au moins un point de mesure est situé approximativement dans un plan, et qu'une position verticale est plus élevée qu'une position verticale actuelle d'un bas d'un bras du système d'exosquelette (10), l'unité de traitement (124) détermine que le terrain frontal dans la direction de déplacement du système d'exosquelette (10) est un escalier ascendant; et
l'unité de traitement (124) est en outre configurée pour calculer une hauteur de marche de l'escalier ascendant afin d'ajuster le fonctionnement du dispositif d'entraînement (110) pour réaliser un prochain point de toucher du bas du bras dans la direction de déplacement adaptée à l'escalier ascendant.

8. Dispositif de commande (112) de la revendication 1 ou système d'exosquelette (10) de la revendication 2,
**caractérisé en ce que**
lorsque la mesure de l'unité de détection (122) montre que le au moins un point de mesure est approximativement situé sur un plan, et une position verticale est inférieure à une position verticale actuelle d'un bas d'un bras du système d'exosquelette (10), l'unité de traitement (124) détermine que le terrain frontal dans la direction de déplacement du système d'exosquelette (10) est un escalier descendant; et
l'unité de traitement (124) est en outre configurée pour calculer une hauteur de marche de l'escalier descendant afin d'ajuster le fonctionnement du dispositif d'entraînement (110) pour réaliser un prochain point de toucher du bas du bras dans la direction de déplacement adapté à l'escalier descendant.

9. Procédé de commande (70), appliqué à un système d'exosquelette (10),
comprenant:
la mesure d'une donnée topographique (702); et
déterminer un terrain frontal du système d'exosquelette (10) dans une direction de déplacement selon les données topographiques, pour ajuster un fonctionnement d'un dispositif d'entraînement (110) du système d'exosquelette (10) (704);
dans lequel l'étape de mesure des données topographiques (702) comprend une distance et une direction d'au moins un point de mesure correspondant au système d'exosquelette (10),
dans lequel le au moins un point de mesure est situé à l'avant du système d'exosquelette (10) dans la direction de déplacement.

10. Procédé de commande (70) de la revendication 9, **caractérisé en ce qu'**il comprend en outre:
lorsqu'au moins une position verticale du au moins un point de mesure est supérieure à une position verticale actuelle d'un bas d'un bras du système d'exosquelette (10),
déterminer que le terrain frontal dans la direction de déplacement du système d'exosquelette (10) est un terrain en pente; et
calculer une pente et une hauteur verticale du terrain en pente et ajuster le fonctionnement du dispositif d'entraînement (110) pour faire en sorte qu'un prochain point de toucher du bas du bras dans la direction de déplacement s'adapte à la hauteur du terrain en pente.

11. Procédé de commande (70) de la revendication 9, **caractérisé en ce qu'**il comprend en outre:
lorsqu'au moins une position verticale du au moins un point de mesure est inférieure à une position verticale actuelle d'un bas d'un bras du système d'exosquelette (10), déterminer que le terrain frontal dans la direction de déplacement du système d'exosquelette (10) est un terrain en descente; et
calculer une pente et une hauteur verticale du terrain en descente et ajuster le fonctionnement du dispositif d'entraînement (110) pour faire en sorte qu'un prochain point de toucher du bas du bras dans la direction de déplacement s'adapte à la hauteur du terrain en descente.

12. Procédé de commande (70) de la revendication 9, **caractérisé en ce qu'**il comprend en outre:
lorsqu'au moins une position verticale du au moins un point de mesure est similaire à une position verticale actuelle d'un bas d'un bras du système d'exosquelette (10), déterminer que le terrain frontal dans la direction de déplacement du système d'exosquelette (10) est un terrain plat; et
ajuster le fonctionnement du dispositif d'entraînement (110) pour faire en sorte qu'un prochain point de toucher du bas du bras dans la direction de déplacement s'adapte au terrain plat.

13. Procédé de commande (70) de la revendication 9, **caractérisé en ce qu'**il comprend en outre:
lorsqu'une distance horizontale entre le au moins un point de mesure et un bas d'un bras du système d'exosquelette (10) n'est pas supérieure à une première valeur, mais qu'une distance verticale entre le point de mesure et le bas est supérieure à une deuxième valeur, déterminer que le terrain frontal dans la direction de déplacement du système d'exosquelette (10) est une bosse; et
calculer une taille de la bosse et ajuster le fonctionnement du dispositif d'entraînement (110) pour que le bas du bras dans la direction de déplacement traverse, tombe sur, ou contourne la bosse ou arrête de se déplacer.

14. Procédé de commande (70) de la revendication 9, **caractérisé en ce qu'**il comprend en outre:
lorsque le au moins un point de mesure est situé approximativement dans un plan, et qu'une position verticale est plus élevée qu'une position verticale actuelle d'un bas d'un bras du système d'exosquelette (10), déterminer que le terrain frontal dans la direction de déplacement du système d'exosquelette (10) est un escalier ascendant; et
calculer une hauteur de marche de l'escalier ascendant et ajuster le fonctionnement du dispositif d'entraînement (110) pour faire en sorte qu'un prochain point de toucher du bas du bras dans la direction de déplacement s'adapte à l'escalier ascendant.

15. Procédé de commande (70) de la revendication 9, **caractérisé en ce qu'**il comprend en outre:
lorsque l'au moins un point de mesure est situé approximativement dans un plan, et qu'une position verticale est inférieure à une position verticale actuelle d'un bas d'un bras du système d'exosquelette (10), déterminer que le terrain frontal dans la direction de déplacement du système d'exosquelette (10) est un escalier descendant; et
calculer une hauteur de marche de l'escalier descendant et ajuster le fonctionnement du dispositif d'entraînement (110) pour faire en sorte qu'un prochain point de toucher du bas du bras dans la direction de déplacement s'adapte à l'escalier descendant.
